# EUROPÄISCHE PATENTANMELDUNG

(11) **EP 3 578 296 A1**
(43) Veröffentlichungstag der Anmeldung: **11.12.2019**
(21) Anmeldenummer: 18175784.0
(22) Anmeldetag: 04.06.2018
(51) Int. Cl.: B24C 1/04, B24C 1/06, B44C 1/22

(54) **VERFAHREN ZUM SELEKTIVEN MATTIEREN EINER OBERFLÄCHE**

(71) Anmelder: AUDI AG, 85045 Ingolstadt (DE)
(72) Erfinder: Brandl, Erhard, 85117 Eitensheim (DE); Karig, Marco, 85049 Ingolstadt (DE); Hujdus, Karolina, 93073 Neutraubling (DE)

(57) **Zusammenfassung**

Die Erfindung betrifft ein Verfahren zur Mattierung einer Oberfläche mit folgenden Schritten: Bereitstellen eines Werkstücks mit einer zu mattierenden Oberfläche, Maskieren der zu mattierenden Oberfläche, um nicht zu mattierende Bereiche abzudecken, Bestrahlung der Oberfläche mit einem Strahlmittelstrahl aus abrasiven Material, so dass nicht maskierte Bereiche mattiert werden. Erfindungsgemäß wird die zu mattierenden Oberfläche mittels eines Tampondruckverfahrens mit wasserlöslichem Abziehlack maskiert.

## Beschreibung

Die Erfindung betrifft ein Verfahren zum Mattieren einer Oberfläche gemäß der Gattung des Patentanspruchs 1.

Vorrichtungen zum Mattieren von glänzenden Oberflächen eines Fahrzeugs und/oder eines Fahrzeugbauteils sind in zahlreichen Variationen bekannt. Diese bekannten Vorrichtungen zum Mattieren von lackierten Oberflächen weisen etwa quaderförmige Strahldüsen bzw. Strahlkammern auf. Um nicht zu mattierende Bereiche der zu mattierenden Oberfläche abzudecken wird die zu mattierende Oberfläche maskiert. Hierbei wird die Maskierung der zu mattierenden Oberflächen mittels Folienbeschichtung oder Siebdruckverfahren durchgeführt.

Als nachteilig kann dabei angesehen werden, dass bei der Maskierung der zu mattierenden Oberfläche mittels Folienbeschichtung hohe Prozesskosten bei konkaven Flächen entstehen, da nur plane und konvexe Flächen automatisierbar maskiert werden können. Zudem entstehen hohe Materialkosten für die Beschaffung der Folie. Die Folie wird manuell auf das Werkstück aufgetragen, so dass der Maskierungsvorgang je nach Größe des Motivs mehrere Minuten dauern kann. Die Folie kann effektiv nur manuell bzw. per Hand oder mit chemischen Zusätzen vom Werkstück entfernt werden, da die Folie nicht wasserlöslich ist. Dies kann sich nachteilig auf die Arbeitssicherheit und den Umweltschutz auswirken. Der manuelle Reinigungsvorgang kann je nach Größe des Bauteils mehrere Minuten dauern.

Bei der der Maskierung der zu mattierenden Oberfläche mittels Siebdruck entstehen ebenfalls hohe Prozesskosten, da nur plane und konvexe Flächen automatisierbar maskierbar sind. Die Maskierung von konkaven Flächen mittels Siebdruck ist technisch nicht möglich. Die Entfernung des Siebdrucks vom Werkstück ist effektiv nur mit chemischen Zusätzen möglich, da der Siebdruck nicht wasserlöslich ist.

Aus der DE 10 2015 013 167 A1 ist ein gattungsgemäßes Verfahren zum Bearbeiten einer glänzenden Oberfläche eines Fahrzeugs und/oder eines Fahrzeugbauteils bekannt, welche mit einer Klarlackschicht einer gegebenen ersten Schichtdicke lackiert ist. Bei dem Verfahren wird ein Strahlmittel in einen durch Unterdruck erzeugten Trägerluftstrom zudosiert, in einem Schlauchleitungssystem zu einer Strahllanze befördert und auf durch eine Strahlkammer unter Unterdruck gesetzte Bearbeitungsfläche gelenkt, von dort in den Luftstrom zurückbefördert, gereinigt und ggf. im Kreislauf gefahren. Hierbei wird die Beschleunigung des Strahlmittels durch den Unterdruck erzeugt und die Strahlkammer auf der Bearbeitungsfläche verschoben, wobei dem Strahlmittel mindestens ein zusätzlicher Energieimpuls durch mindestens einen weiteren vom Unterdruck angesaugten, mindestens unter Atmosphärendruck stehenden Gasstrom zum Erreichen einer deutlich über der Strömungsgeschwindigkeit des Trägerluftstromes liegenden Endgeschwindigkeit stromaufwärts von einem Dosierort erteilt wird. Mit der Endgeschwindigkeit wird ein Energieeintrag in die Bearbeitungsfläche in Abhängigkeit der Parameter Art und Form der Bearbeitungsfläche und des Strahlmittels, Beladungsgrad des Trägerluftstromes mit Strahlmittel, Unterdruck im Trägerluftstrom, Strahlzeit und Strahltemperatur eingestellt, sodass ungefähr 1 bis 50 Prozent der gegebenen ersten Schichtdicke der Klarlackschicht abgetragen wird, wodurch die Oberfläche des Fahrzeugs und/oder des Fahrzeugbauteils mattiert wird und sich eine reduzierte zweite Schichtdicke der Klarlackschicht ausbildet.

Aus der DE 102 46 592 A1 ist ein Tampondruckverfahren bekannt, welches zum reproduzierbaren Bedrucken von Bauteilen mit einem Druckmaterial unter Einsatz eines Gelatinedruckstempels dient. Hierbei ist vorgesehen, das der jeweilige Bedruckvorgang zur Gewährleistung einer hinreichenden und reproduzierbaren Druckqualität unter mindestens einem vorgegebenen Umgebungsbetriebsparameterwert erfolgt.

Aus der DE 38 30 341 A1 ist ein System zur Durchführung eines Permeationsdrucks auf Kunststoff-Formkörper. Hierbei wird mittels eines elastischen Übertragungskissens (Tampon) ein farbiges Druckbild auf eine geformte Oberfläche eines jeweiligen Kunststoff-Formkörpers aufgedruckt. Das Übertragungskissen kann aus Gelatine, Silikonkautschuk usw. hergestellt sein.

Der Erfindung liegt die Aufgabe zu Grunde, ein Verfahren zum Mattieren einer Oberfläche bereitzustellen, welches eine kostengünstige und umweltschonende automatische Maskierung der zu mattierenden Oberfläche ermöglicht, um nicht zu mattierende Bereiche abzudecken.

Diese Aufgabe wird durch ein Verfahren zum Mattieren einer Oberfläche mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Um ein Verfahren zum Mattieren einer Oberfläche bereitzustellen, welches eine kostengünstige und umweltschonende automatische Maskierung der zu mattierenden Oberfläche ermöglicht, um nicht zu mattierende Bereiche abzudecken, wird die zu mattierenden Oberfläche mittels eines Tampondruckverfahrens mit einem wasserlöslichen Abziehlack maskiert. Nach dem Maskieren der zu mattierenden Oberfläche des bereitgestellten Werkstücks, wird die Oberfläche mit einem Strahlmittel aus abrasiven Material bestrahlt, so dass nicht maskierte Bereiche mattiert werden. Die Bestrahlung wird durchgeführt, bis der gewünschte Mattierungsgrad erreicht ist.

Ausführungsformen des erfindungsgemäßen Verfahrens haben im Vergleich zur Maskierung der zu mattierenden Oberfläche mittels Folienbeschichtung oder Siebdruck den Vorteil, dass eine automatisierte Maskierung von konvexen, planen und konkaven Flächen möglich ist, und dadurch geringere Prozesskosten entstehen. Zudem ergeben sich durch den wasserlöslichen Abziehlack deutlich geringere Materialkosten im Vergleich zur Folie. Da der umweltschonende wasserlösliche Abziehlack einfach mit reinem Wasser gegebenenfalls mit Wasser und leichten chemischen Zusätzen entfernt werden kann, wirkt sich dies vorteilhaft bezüglich Arbeitssicherheit und Umweltschutz aus. Zudem ist es durch die einfache Reinigung möglich, dass der Reinigungsvorgang maschinell und somit schneller als von Hand durchgeführt werden kann. Im Vergleich zur Folienbeschichtung ergibt sich eine kürzere Bestrahlungszeit, da die zu mattierenden Oberflächen sind von Beginn an ohne Beschichtung sind, bei der Folienbeschichtung aber zunächst eine Trägerfolie aufgebracht werden muss, welche dann erst durchstrahlt werden muss.

In vorteilhafter Ausgestaltung des Verfahrens kann ein Silikontampon einer Tampondruckanlage partiell mit dem Abziehlack beschichtet werden, wobei der beschichtete Silikontampon die zu maskierende Oberfläche mit dem Abziehlack bedrucken kann. Hierbei kann der Druckvorgang wiederholt werden, bis die Maskierung eine vorgegebene Schichtdicke erreicht.

In weiterer vorteilhafter Ausgestaltung des Verfahrens kann der Abziehlack einen organischen Lösungsmittelanteil von weniger als 5%, einen Wasseranteil von weniger als 65% und einen Festkörpergehalt von mehr als 30% aufweisen.

In weiterer vorteilhafter Ausgestaltung des Verfahrens kann die zu maskierende Oberfläche konvex oder konkav sein.

In weiterer vorteilhafter Ausgestaltung des Verfahrens kann die aufgebrachte Maskierung von der mattierten Oberfläche mit reinem Wasser oder mit Wasser und leichten chemischen Zusätzen entfernt werden. Dadurch kann die aufgebrachte Maskierung aus wasserlöslichem Abziehlack umweltschonend wieder entfernt werden.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigt:

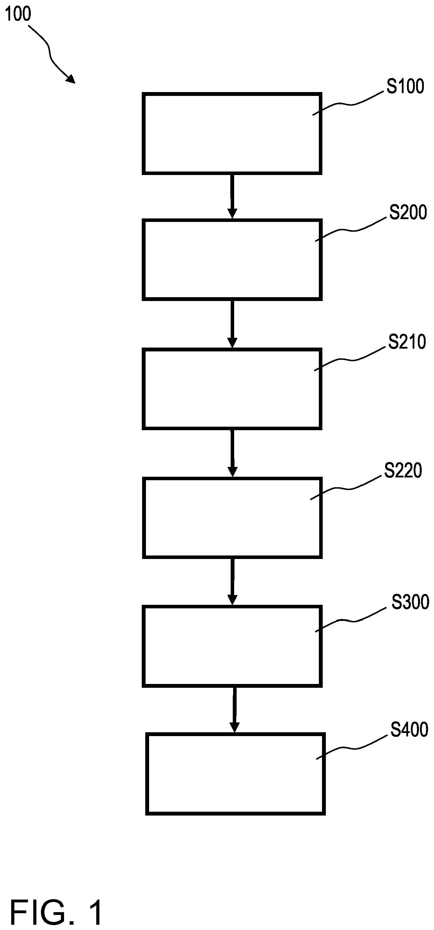

- Fig. 1: eine schematisches Ablaufdiagramm eines Ausführungsbeispiels eines erfindungsgemäßen Verfahrens zum Mattieren einer Oberfläche.

Wie aus Fig. 1 ersichtlich ist, umfasst das dargestellte Ausführungsbeispiel des erfindungsgemäßen Verfahrens 100 zur Mattierung einer Oberfläche einen Schritt S100, in welchem ein Werkstück mit einer zu mattierenden Oberfläche bereitgestellt wird. In den Schritten S200 bis S220 wird die zu mattierende Oberfläche maskiert, um nicht zu mattierende Bereiche abzudecken. Im Schritt S300 wird die Oberfläche mit einem Strahlmittelstrahl aus abrasiven Material bestrahlt, so dass nicht maskierte Bereiche mattiert werden.

Erfindungsgemäß wird die zu mattierenden Oberfläche mittels eines Tampondruckverfahrens mit wasserlöslichem Abziehlack maskiert.

Im dargestellten Ausführungsbeispiel wird im Schritt S200 der wasserlösliche Abziehlack und eine Tampondruckanlage bereitgestellt. Im Schritt S210 wird ein Silikontampon der Tampondruckanlage partiell mit dem Abziehlack beschichtet. Im Schritt S220 bedruckt der beschichtete Silikontampon die zu maskierende Oberfläche mit dem Abziehlack. Der Druckvorgang wird wiederholt, bis die Maskierung eine vorgegebene Schichtdicke erreicht.

Die im Schritt S300 durchgeführte Bestrahlung der zu mattierenden Oberfläche wird durchgeführt, bis ein gewünschter Mattierungsgrad erreicht ist. Anschließend wird im Schritt S400 die aufgebrachte Maskierung mit reinem Wasser oder mit Wasser und leichten chemischen Zusätzen von der mattierten Oberfläche entfernt.

Im dargestellten Ausführungsbespiel weist der wasserlösliche Abziehlack einen organischen Lösungsmittelanteil von weniger als 5%, einen Wasseranteil von weniger als 65% und einen Festkörpergehalt von mehr als 30% auf.

In vorteilhafter Weise kann die zu maskierende Oberfläche bzw. die zu mattierende Oberfläche konvex oder konkav oder eben ausgebildet sein.

Da bei Ausführungsformen des erfindungsgemäßen Verfahrens bei der Maskierung der zu mattierenden Oberfläche das Tampondruckverfahren mit wasserlöslichem Abziehlack eingesetzt wird, ergibt sich im Gegensatz zu den herkömmlichen Tampondruckverfahren mit lösungsmittelbasierten Tampondruckfarben in vorteilhafter Weise eine geringere Umweltbelastung.

Durch die umweltschonende Maskierung der zu mattierenden Oberfläche können verschiedene optische Effekte erzeugt werden.

### BEZUGSZEICHENLISTE

- 100: Verfahren zum Mattieren von Oberflächen
- S100 bis S400: Verfahrensschritt

## Patentansprüche

1. Verfahren (100) zur Mattierung einer Oberfläche mit folgenden Schritten:
Bereitstellen eines Werkstücks mit einer zu mattierenden Oberfläche,
Maskieren der zu mattierenden Oberfläche, um nicht zu mattierende Bereiche abzudecken,
Bestrahlung der Oberfläche mit einem Strahlmittelstrahl aus abrasiven Material, so dass nicht maskierte Bereiche mattiert werden,
**dadurch gekennzeichnet, dass**
die zu mattierenden Oberfläche mittels eines Tampondruckverfahrens mit wasserlöslichem Abziehlack maskiert wird.

2. Verfahren (100) nach Anspruch 1, **dadurch gekennzeichnet, dass** ein Silikontampon einer Tampondruckanlage partiell mit dem Abziehlack beschichtet wird, wobei der beschichtete Silikontampon die zu maskierende Oberfläche mit dem Abziehlack bedruckt.

3. Verfahren (100) nach Anspruch 2, **dadurch gekennzeichnet, dass** der Druckvorgang wiederholt wird, bis die Maskierung eine vorgegebene Schichtdicke erreicht.

4. Verfahren (100) nach einem der Ansprüche 1 bis 3, **dadurch gekennzeichnet, dass** der Abziehlack einen organischen Lösungsmittelanteil von weniger als 5%, einen Wasseranteil von weniger als 65% und einen Festkörpergehalt von mehr als 30% aufweist.

5. Verfahren (100) nach einem der Ansprüche 1 bis 4, **dadurch gekennzeichnet, dass** die zu maskierende Oberfläche konvex oder konkav ist.

6. Verfahren (100) nach einem der Ansprüche 1 bis 5, **dadurch gekennzeichnet, dass** die aufgebrachte Maskierung von der mattierten Oberfläche mit reinem Wasser oder mit Wasser und leichten chemischen Zusätzen entfernt wird.
